# EUROPÄISCHE PATENTSCHRIFT

(11) **EP 3 504 109 B1**
(45) Veröffentlichungstag und Bekanntmachung des Hinweises auf die Patenterteilung: **13.10.2021**
(21) Anmeldenummer: 17751357.9
(22) Anmeldetag: 04.08.2017
(51) Int. Cl.: B62D 15/02

(54) **SPURWECHSELASSISTENZSYSTEM UND -VERFAHREN ZUM AUTOMATISIERTEN DURCHFÜHREN MEHRFACHER SPURWECHSEL**
LANE CHANGE ASSISTANT SYSTEM AND METHOD OF PERFORMING MULTIPLE LANE CHANGES
SYSTÈME D'ASSISTANCE DE CHANGEMENT DE VOIE ET PROCÉDÉ D'EXÉCUTION DE CHANGEMENT DE VOIES MULTIPLES

(30) Priorität: 29.08.2016 DE 102016216135
(43) Veröffentlichungstag der Anmeldung: 03.07.2019
(73) Patentinhaber: Bayerische Motoren Werke Aktiengesellschaft, 80809 München (DE)
(72) Erfinder: RESCH, Christoph, 80339 München (DE)
(86) Internationale Anmeldenummer: PCT/EP2017/069786
(87) Internationale Veröffentlichungsnummer: WO 2018/041528

(56) Entgegenhaltungen:
- WO-A2-2014/016486
- DE-A1- 10 012 737
- DE-A1- 10 210 723
- DE-A1-102005 050 662
- DE-A1-102008 062 206
- DE-A1-102014 222 836

## Beschreibung

Die Erfindung betrifft ein Spurwechselassistenzsystem für ein Kraftfahrzeug zum Durchführen von Spurwechseln mit zumindest automatisierter Querführung. Es ist vorzugsweise vorgesehen, dass neben der Querführung auch die Längsführung vom System automatisiert durchgeführt wird. Ferner betrifft die Erfindung ein entsprechendes Spurwechselassistenzverfahren.

Bei bekannten Spurwechselassistenzsystemen mit einer automatisierten Spurenwechselfunktion zeigt typischerweise der Fahrer durch eine bewusste Bedienhandlung einen Spurwechselwunsch an, woraufhin das Fahrzeug einer vom System geplanten Trajektorie auf die Nebenspur mit automatischer Querführung und im Allgemeinen auch mit automatischer Längsführung folgt. In derartigen Spurwechselassistenzsystemen wird typischerweise ein fahrerseitiger Spurwechselwunsch durch ein Betätigen eines Bedienelementes signalisiert, beispielsweise eines Blinkerhebels zum Auslösen eines von außerhalb des Fahrzeugs sichtbaren Fahrtrichtungsanzeigers.

Ein beispielhaftes Spurwechselassistenzsystem ist in der Druckschrift DE 102 10 723 A1 beschrieben. Zum Auslösen des Spurwechselvorgangs muss der Fahrer einen Blinkerhebel betätigen und während der ersten Hälfte des Spurwechselvorgangs (d. h. bis das Fahrzeug die Grenze zu der Nachbarfahrspur überquert) dauerhaft weiterhin betätigen, andernfalls wird der Spurwechsel abgebrochen. Ein gattungsgemäßes Spurwechselassistenzsystem ist in DE10012737 A1 beschrieben.

Bekannte Spurwechselassistenzsysteme überwachen im Allgemeinen vor dem Spurwechselmanöver durch eine geeignete Umfeldsensorik das Fahrzeugumfeld, insbesondere den umliegenden Verkehr. Auf eine fahrerseitige Bedienhandlung hin, z.B. eine Betätigung des Blinkerhebels, wechselt das Fahrzeug automatisch die Spur, falls mittels der Sensorik erkannt wurde, dass der Spurwechsel ohne Gefahr durchführbar ist.

In einer ersten Generation derartiger Spurwechselassistenzsysteme ist der Fahrer für einen unfallfreien Spurwechsel verantwortlich, d.h. trotz der Umfeldsensorik muss der Fahrer den umliegenden Verkehr überwachen. In einer späteren Ausbaustufe muss der Fahrer das Fahrzeugumfeld nicht mehr überwachen und der Fahrer trägt dann auch nicht mehr die Verantwortung für den unfallfreien Spurwechsel.

Außerdem sind rein anzeigende Fahrerassistenzsysteme bekannt, die dem Fahrer bei aktiver Zielführung unter Verwendung eines Navigationssystems einen notwendigen Spurwechsel anzeigen, der notwendig ist, um der aktuellen Zielführung zu folgen. Dafür wird seitens des Fahrerassistenzsystems erkannt, auf welcher Spur sich das Fahrzeug aktuell befindet und auf weiche Spur gewechselt werden muss, um der aktiven Zielführung zu folgen und das Navigationsziel zu erreichen.

Nachteilig an bekannten Spurwechselassistenzsystemen ist, dass diese in komplexen Spurwechselsituationen mit mehreren, nacheinander durchzuführenden notwendigen Spurwechseln vom Fahrer aufwändig zu bedienen sind.

Es ist daher Aufgabe der Erfindung, ein Spurwechselassistenzsystem und ein entsprechendes Spurwechselassistenzverfahren anzugeben, welches sich durch einen verbesserten Bedienkomfort in komplexen Spurwechselsituationen mit mehreren, nacheinander durchzuführenden notwendigen Spurwechseln auszeichnet.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Spurwechselassistenzsystem für ein Kraftfahrzeug zum automatisierten Durchführen eines Spurwechsels mit zumindest automatisierter Querführung. Es ist von Vorteil, wenn außerdem noch die Längsführung im Rahmen des Spurwechsels automatisiert durchgeführt wird. Das Assistenzsystem ist eingerichtet, aufgrund von Information eines Navigationssystems zur Zielführung festzustellen, dass mehrere Spurwechsel ausgehend von der aktuellen Fahrspur auf eine Zielfahrspur erforderlich sind, um der Zielführung zu folgen. Vorzugsweise ist dem Spurwechselassistenzsystem bekannt, auf welcher Fahrspur sich das eigene Fahrzeug aktuell befindet und in welche Zielspur zu wechseln ist, um der aktiven Zielführung zu folgen.

Das Fahrerassistenzsystem ist ferner eingerichtet, den Fahrer über ein Erfordernis zum Spurwechsel zu informieren (d.h. es erfolgt ein Spurwechselhinweis). Dies erfolgt beispielweise optisch, akustisch und/oder haptisch. Das Spurwechselassistenzsystem informiert den Fahrer über das Erfordernis zum Spurwechsel beispielsweise in der Weise, dass dem Fahrer die notwendigen mehrfachen Spurwechsel (als in ihrer Anzahl erkennbar) signalisiert werden. Beispielsweise werden auf einer Anzeigeeinrichtung im Fahrzeugcockpit oder in einem Head-Up-Display eine aktuelle Fahrspur und eine Zielfahrspur, auf die aufgrund der aktiven Zielführung mit mehreren Spurwechseln hintereinander zu wechseln ist, in schematischer Weise, markiert. Das Informieren über ein Erfordernis zum Spurwechsel kann auch darin bestehen, dass auf eine zu nehmende Ausfahrt von der aktuell befahrenen Autobahn oder Schnellstraße hingewiesen wird, ohne dass hierbei die einzelnen notwendigen Spurwechsel dem Fahrer signalisiert werden.

Durch eine fahrerseitige Auslöse-Bedienhandlung kann der Fahrer anzeigen, dass er die erforderliche Anzahl der Spurwechsel durchführen will, um der aktiven Zielführung zu folgen. Das Fahrerassistenzsystem prüft, ob eine derartige fahrerseitige Auslöse-Bedienhandlung zum Auslösen der erforderlichen mehrfachen Spurwechsel vorliegt. Bei der Auslöse-Bedienhandlung handelt es sich vorzugsweise um eine Betätigung eines Blinkerhebels entsprechend der Richtung der erforderlichen Spurwechsel. Es wäre aber auch die Betätigung eines dedizierten Bedienelements, welches lediglich für die Spurwechselfunktion vorgesehen ist, oder die Betätigung eines multifunktionalen Dreh-Drückschalters in der Mittelkonsole denkbar. Bei der Auslöse-Bedienhandlung muss es sich nicht um die Betätigung eines Bedienelements handeln. Es kann alternativ auch Bediengeste vorgesehen sein, die dem Auslösen der mehrfachen Spurwechsel zugeordnet ist, und die beispielsweise durch Auswertung des Videobilds einer Innenraumkamera erkannt wird. Alternativ ist als Auslöse-Bedienhandlung auch das fahrerseitige Aussprechen eines zugeordneten Sprachbefehls denkbar, der über ein Mikrofon und eine entsprechende Audiosignal-Verarbeitung als solcher erkennbar ist.

Falls festgestellt wird, dass die Auslöse-Bedienhandlung des Fahrers vorliegt, werden die erforderlichen mehreren Spurwechsel nacheinander ausgehend von der aktuellen Fahrspur auf eine Zielfahrspur mit zumindest automatisierter Querführung automatisiert seitens des Spurwechselassistenzsystems durchgeführt. Das Assistenzsystem überwacht dabei vorzugsweise das Fahrzeugumfeld, insbesondere den Verkehr, mit einer oder mehrere geeigneter Sensoriken. Wenn beispielsweise aufgrund von Umfeldinformation festgestellt wurde, dass eine unzulässige hohe Unfallgefahr in Bezug auf den ersten Spurwechsel vorliegt, werden der erste Spurwechsel und auch die nachfolgenden Spurwechsel überhaupt nicht ausgelöst oder erst später ausgelöst, wenn die Unfallgefahr wieder ausreichend gering ist.

Bei dem erfindungsgemäßen Spurwechselassistenzsystem werden also auf eine fahrerseitige Bedienhandlung hin so viele Spurwechsel automatisiert durchgeführt, wie notwendig sind, um der aktuellen Zielführung zum Navigationsziel zu folgen. Dies hat den Vorteil, dass in komplexen Spurwechselsituationen mit mehreren, unmittelbar hintereinander durchzuführenden Spurwechseln zum Erreichen einer nicht unmittelbar der Ausgangsfahrspur benachbarten Zielspur der Fahrer die erforderlichen mehreren Spurwechsel durch eine zugeordnete Fahrerbedienhandlung auslösen kann.

In einer ersten Ausbaustufe kann vorgesehen sein, dass dabei der Fahrer noch für die Überwachung des Fahrzeugumfelds, insbesondere des umliegenden Verkehrs, verantwortlich ist. Insbesondere ist der Fahrer dafür verantwortlich, den rückwärtigen Verkehr, insbesondere auf schnell überholende Fahrzeuge, zu überwachen. In einer weiteren Ausbaustufe kann vorgesehen sein, dass der Fahrer nicht mehr für die Überwachung des Fahrzeugumfelds verantwortlich ist, sondern dass das Fahrzeug durch die vorhandene Umfeldsensorik und/oder durch Kommunikation mit dem umliegenden Verkehr die Situation vollständig überwachen kann, ohne dass der Fahrer hierfür nötig ist.

Das Spurwechselassistenzsystem dient vorzugsweise nicht nur zum automatisierten Durchführen von Spurwechseln, sondern auch zum automatisierten Halten der Fahrspur mit automatisierter Quer- und Längsführung. Vor der Durchführung der automatisierten Spurwechsel ist vorzugsweise bereits eine automatisierte Quer- und Längsführung aktiv, um die aktuelle Fahrspur automatisiert zu halten. Im Rahmen der automatisierten Querführung wird beispielsweise das Fahrzeug durch Ansteuerung der Lenkung auf der Spurmitte gehalten. Zur automatisierten Längsführung kann ein Abstandsregeltempomat vorgesehen sein. In einer Folgefahrt hinter einem vorausfahrenden Fahrzeug regelt der Abstandsregeltempomat den Abstand zu dem vorausfahrenden Fahrzeug. In einer Freifahrt ohne Abstandsregelung auf ein vorausfahrendes Fahrzeug hingegen regelt der Abstandsregeltempomat die Fahrzeuggeschwindigkeit auf eine Setzgeschwindigkeit, die beispielsweise vom Fahrer gesetzt wurde.

Es ist von Vorteil, wenn direkt nach Signalisieren der Information über das Erfordernis des Spurwechsels nur eine einzige Bedienhandlung zum Auslösen und Durchführen der mehreren Spurwechsel erforderlich ist. Es wäre alternativ aber auch denkbar, dass auf die Information hin mehrere Bedienhandlungen durchgeführt werden müssen, um die mehrfachen Spurwechsel auszulösen. Die Anzahl der Bedienhandlungen hängt dabei aber vorzugsweise nicht von der Anzahl n (mit n > 1) erforderlicher Spurwechsel ab. Beispielsweise kann vorgesehen sein, dass der Blinkerhebel unabhängig von der Anzahl n erforderlicher Spurwechsel generell zweimal betätigt werden muss, um danach die mehrfachen Spurwechsel auszulösen. Es wäre aber auch denkbar, dass bei n erforderlichen Spurwechseln zum Folgen der aktiven Zielführung der Blinkerhebel genau n mal betätigt werden muss, damit danach die n Spurwechsel ausgelöst werden.

Es kann vorgesehen sein, dass die Auslöse-Bedienhandlung noch nach Auslösen des ersten Spurwechsels der mehrfachen Spurwechsel fortgesetzt werden muss, damit beispielsweise der Spurwechsel nicht abgebrochen wird. Beispielsweise kann vorgesehen sein, dass die Auslöse-Bedienhandlung das Halten des Blinkerhebels in der sogenannten Tippblinken-Stellung ist, wobei der Blinkerhebel beispielsweise für eine bestimmte Mindestzeitdauer (z. B. 1 s) nach Beginn des ersten Spurwechselvorgangs in der Tippblinken-Stellung gehalten werden muss, damit der begonnene erste Spurwechselvorgang nicht abgebrochen wird. Für den Fall, dass die Auslöse-Bedienhandlung noch nach Auslösen des ersten Spurwechsels der mehrfachen Spurwechsel fortgesetzt werden muss, ist das System aber vorzugsweise so ausgestaltet, dass die Auslöse-Bedienhandlung zum Auslösen sämtlicher erforderlicher Spurwechsel bereits vor Abschluss des ersten Spurwechsels seitens des Fahrers beendet werden kann (beispielsweise bei Überqueren der Spurgrenze zwischen der Ausgangsfahrspur und der benachbarten Fahrspur).

Das Spurwechselassistenzsystem ist vorzugsweise eingerichtet, auf eine Bedienhandlung des Fahrers hin, einen einzelnen Spurwechsel automatisiert durchzuführen, beispielsweise bei Umschalten des Blinkerhebels von der Ruhestellung in die Tippblinken-Stellung.

Vorzugsweise ist die Bedienhandlung zur automatisierten Durchführung der aufgrund der Zielführung erforderlichen mehreren Spurwechsel unterschiedlich zu der Bedienhandlung zur automatisierten Durchführung eines einzelnen Spurwechsels (beispielsweise ein Umschalten in die Einraststellung im Unterschied zu einem Umschalten in die Tippblinken-Stellung).

Die Information des Fahrers wird vorzugsweise in Reaktion darauf ausgelöst, dass seitens des Systems festgestellt wird, dass mehrere Spurwechsel zum Folgen der Zielführung erforderlich sind. Es wäre aber auch denkbar, dass in Abhängigkeit von Information eines Navigationssystems festgestellt wird, dass beispielsweise eine vorausliegende Ausfahrt genommen werden muss und in Abhängigkeit hiervon der Fahrer über ein Erfordernis zum Spurwechsel informiert wird. Das System stellt dann beispielsweise erst später fest, dass mehrere Spurwechsel ausgehend von der aktuellen Fahrspur auf eine Zielfahrspur erforderlich sind (beispielsweise nachdem der Fahrer eine Auslöse-Bedienhandlung durchgeführt hat).

Es ist beispielsweise im Fahrzeugcockpit ein Fahrtrichtungsanzeiger-Bedienelement zum Aktivieren eines von außerhalb des Fahrzeugs sichtbaren Fahrtrichtungsanzeigers vorgesehen, wobei die fahrerseitige Auslöse-Bedienhandlung zum Auslösen der mehrfachen Spurwechsel eine Betätigung des Fahrtrichtungsanzeiger-Bedienelements ist.

Beispielsweise handelt es sich bei dem Fahrtrichtungsanzeige-Bedienelement um einen als Lenkstockschalter realisierten Blinkerhebel. Ein derartiger Blinkerhebel weist im Allgemeinen eine Ruhestellung für einen nicht aktivierten Fahrrichtungsanzeiger sowie eine Einraststellung auf, in der der Fahrrichtungsanzeiger dauerhaft aktiviert ist, ohne dass der Blinkerhebel seitens des Fahrers gehalten werden muss. Vor der Einraststellung ist im Allgemeinen eine Tippblinken-Stellung vorgesehen, in der der Fahrrichtungsanzeiger aktiviert ist und bei Loslassen des Blinkerhebels in die Ruhestellung fällt.

Bei der Auslöse-Bedienhandlung zum Auslösen der mehrfachen Spurwechsel handelt es sich beispielsweise um ein Umschalten des Blinkerhebels von der Ruhestellung in die Einraststellung.

Alternativ kann vorgesehen sein, dass zum Durchführen der mehrfachen Spurwechsel der Blinkerhebel von der Ruhestellung in der Tippblinken-Stellung bewegt werden muss. Es ist in diesem Fall vorzugsweise vorgesehen, dass der Blinkerhebel in der Tippblinken-Stellung mindestens solange in der Tippblinken-Stellung gehalten werden muss, bis ein bestimmtes Kriterium erfüllt ist. Wenn das Kriterium nicht erfüllt ist, werden die mehrfachen Spurwechsel nicht ausgelöst oder ein bereits begonnener Spurwechsel wird abgebrochen.

Beispielsweise muss der Blinkerhebel zum Auslösen der mehrfachen Spurwechsel für eine Zeitdauer größer oder größer gleich als ein Zeitdauer-Schwellwert (z. B. 1 s) oder für eine Fahrstrecke größer oder größer gleich ein Fahrstrecken-Schwellwert (z. B. 40 m) in der Tippblinken-Stellung gehalten werden. Es kann auch alternativ oder zusätzlich vorgesehen sein, dass der Blinkerhebel in der Tippblinken-Stellung gehalten werden muss, bis ein bestimmtes Kriterium in Bezug auf den Manöverfortschritt erfüllt sein muss (z. B. das Erreichen oder Überschreiten der Spurgrenze), da ansonsten die mehrfachen Spurwechsel wieder abgebrochen werden.

Ein bevorzugter Anwendungsfall des erfindungsgemäßen Spurwechselassistenzsystems ist das Folgen einer Ausfahrt, beispielsweise auf einer Autobahn oder einer Schnellstraße. Das Spurwechselassistenzsystem ist in diesem Fall eingerichtet, festzustellen, dass ausgehend von der aktuellen Fahrspur mehrere Spurwechsel aufgrund einer im Rahmen der Zielführung zu nehmenden, vorausliegenden Ausfahrt erforderlich sind. Das Assistenzsystem ermöglicht es, dass die erforderlichen Spurwechsel zum Erreichen der Ausfahrt in Reaktion auf die Auslöse-Bedienhandlung des Fahrers automatisiert durchgeführt werden.

Eine zu einer Ausfahrt alternative örtliche Spurwechselursache, welche mehrfache Spurwechsel erforderlich machen kann, ist beispielsweise eine vorausliegende Fahrspurauftrennung oder ein vorausliegendes Spurende. Auch für diese Anwendungsfälle kann eine Verwendung des erfindungsgemäßen Spurwechselassistenzsystems vorgesehen sein.

Es kann eine streckenbezogene oder zeitliche Distanz in Bezug auf eine vorausliegende Spurwechselursache, insbesondere in Bezug auf eine zu nehmende vorausliegende Ausfahrt, bestimmt werden oder von einem Navigationssystem entgegen genommen werden, wobei das Spurwechselassistenzsystem vorzugsweise den Fahrers über das Erfordernis des Spurwechsels in Abhängigkeit von dieser Distanz informiert. Wenn beispielsweise ein bestimmter Abstand zu der Ausfahrt erreicht oder unterschritten wird, wird der Fahrer über die erforderlichen Spurwechsel informiert. Es kann beispielsweise eine Distanz bestimmt oder entgegen genommen werden, bis zu der sämtliche erforderlichen n Spurwechsel oder nur ein Teil dieser n Spurwechsel (z. B. n - 1 Spurwechsel im Fall einer Ausfahrt mit einem Verzögerungsstreifen) durchgeführt sein sollten, um dem Navigationsziel (im Speziellen der Ausfahrt) zu folgen.

Die Distanz in Bezug auf die örtliche Spurwechselursache kann die Distanz zu dieser örtlichen Spurwechselursache sein, beispielsweise die Distanz bis zu der Ausfahrt. Die Distanz zur Ausfahrt kann beispielsweise die Distanz bis zum Beginn eines Verzögerungsstreifens der Ausfahrt sein.

Vorzugsweise ist das Fahrerassistenzsystem eingerichtet, die aktuelle Fahrspur festzustellen, wobei dann vorzugsweise der Zeitpunkt oder die Fahrzeugposition, zu dem bzw. zu der das Spurwechselassistenzsystem über das Erfordernis des Spurwechsels informiert, von der aktuellen Fahrspur abhängig ist. Wenn beispielsweise das Fahrzeug bei einer dreispurigen Autobahn mit drei Spuren pro Fahrtrichtung das Fahrzeug sich zunächst auf der äußeren Überholspur befindet, wird der Fahrer zeitlich früher vor einer Ausfahrt über die Spurwechsel informiert, als wenn sich das Fahrzeug zunächst auf der der Ausfahrt benachbarten Fahrspur oder der mittleren Fahrspur befindet, da im erst genannten Fall mehr Fahrspurwechsel nötig sind.

Vorzugsweise ist dem Assistenzsystem sowohl bekannt, auf welcher Spur sich das eigene Fahrzeug befindet und in welche Zielspur zu wechseln ist, um dem Navigationsziel zu folgen.

Es kann beispielsweise in Abhängigkeit der aktuellen Fahrspur eine Anzahl von durchzuführenden Fahrspurwechseln ausgehend von der aktuellen Fahrspur bestimmt werden, wobei der Zeitpunkt oder die Fahrzeugposition, zu dem bzw. zu der das Spurwechselassistenzsystem über das Erfordernis des Spurwechsels informiert, von dieser Anzahl abhängig ist. Dabei wird bei sonst gleichen Voraussetzungen vorzugsweise umso früher vor der örtlichen Spurwechselursache der Fahrer über die Spurwechsel informiert, je höher die Anzahl der Spurwechsel ist. Hierdurch kann gewährleistet werden, dass der Fahrer früh genug informiert wird, damit in Reaktion auf die fahrerseitige Bedienhandlung die Anzahl der Spurwechsel rechtzeitig automatisiert durchgeführt werden können.

Die Anzahl von durchzuführenden Spurwechseln ausgehend von der aktuell befahrenen Fahrspur kann die Anzahl von Spurwechseln bis zur Fahrspur der Ausfahrt oder - im Fall einer zusätzlichen Fahrspur für die Ausfahrt (z. B. ein Verzögerungsstreifen) - bis zur derjenigen Fahrspur sein, die der Fahrspur der Ausfahrt benachbart ist. Die Anzahl von durchzuführenden Spurwechseln muss also nicht der Gesamtzahl der durchzuführenden Spurwechsel entsprechen, sondern kann auch beispielsweise um eins geringer sein.

Es ist von Vorteil, wenn das Spurwechselassistenzsystem eingerichtet ist, Information über das Verkehrsaufkommen des umliegenden Verkehrs zu bestimmen, und dann den Punkt, zu dem der Fahrer über den notwendigen Spurwechsel informiert wird, in Abhängigkeit von der Information über das Verkehrsaufkommen festzulegen. Das Verkehrsaufkommen des umliegenden Verkehrs kann in einer einfachen Ausbaustufe beispielsweise durch eine längerfristige Beobachtung der umliegenden Objekte mittels einer OnBoard-Sensorik wie Kamera, Radarsensoren, Laserscanner etc. bestimmt werden. In einer weiteren Ausbaustufe ist es denkbar, dass die in einem definierten Bereich umliegenden Verkehrsteilnehmer über Fahrzeug-Fahrzeug-Kommunikation ihre jeweilige Position und Geschwindigkeit dem Egofahrzeug mitteilen, woraus letzteres das aktuelle Verkehrsaufkommen berechnen/schätzen kann. Dabei muss allerdings die Kommunikation nicht unbedingt von Fahrzeug zu Fahrzeug erfolgen. Vielmehr kann auch jedes Fahrzeug seine Daten an ein Backend-Serversystem senden, in dem dann die Verkehrsanalyse durchgeführt wird und von dem dann die Information über das Verkehrsaufkommen an andere Verkehrsteilnehmer weitergegeben wird.

Wenn beispielsweise ein hohes Verkehrsaufkommen vorliegt, wird vorzugsweise die Information des Fahrers früher vor einer vorausliegenden Spurwechselursache (z. B. einer Ausfahrt) eingeleitet, als wenn bei sonst gleichen Voraussetzungen ein im Vergleich dazu geringes Verkehrsaufkommen vorliegt. Dies trägt dem Gedanken Rechnung, dass das System bei einem hohen Verkehrsaufkommen mehr Zeit für die notwendigen Spurwechsel benötigt und daher entsprechend früher über die erforderlichen Spurwechsel informiert werden sollte. Beispielsweise wird die Anzahl der notwendigen Spurwechsel bestimmt und in Abhängigkeit der Information über das Verkehrsaufkommen die durchschnittliche Zeit für einen Spurwechsel bestimmt, so dass die voraussichtliche Zeit für sämtliche notwendigen Spurwechsel berechnet werden kann. In Abhängigkeit davon kann dann der Punkt festgelegt werden, wann bzw. wo der Fahrer über das Spurwechsel-Erfordernis informiert wird.

Ein zweiter Aspekt der Erfindung betrifft ein Spurwechselassistenzverfahren für ein Kraftfahrzeug zum automatisierten Durchführen eines Spurwechsels mit zumindest automatisierter Querführung. Gemäß dem Verfahren wird aufgrund von Information eines Navigationssystems zur Zielführung festgestellt, dass mehrere Spurwechsel ausgehend von der aktuellen Fahrspur auf eine Zielfahrspur erforderlich sind, um der Zielführung zu folgen. Der Fahrer wird über ein Erfordernis zum Spurwechsel informiert. Es wird geprüft, ob eine fahrerseitige Auslöse-Bedienhandlung zum Auslösen der erforderlichen mehrfachen Spurwechsel vorliegt. In Reaktion auf das Feststellen des Vorliegens der Auslöse-Bedienhandlung werden die erforderlichen mehreren Spurwechsel ausgehend von der aktuellen Fahrspur auf die Zielfahrspur automatisiert durchgeführt.

Die vorstehenden Ausführungen zum erfindungsgemäßen Spurwechselassistenzsystem nach dem ersten Aspekt der Erfindung gelten in entsprechender Weise auch für das erfindungsgemäße Spurwechselassistenzverfahren nach dem zweiten Aspekt der Erfindung.

Die Erfindung wird nachfolgend anhand eines Ausführungsbeispiels unter Zuhilfenahme der beigefügten Zeichnungen beschrieben. In diesen zeigen:
- Fig. 1: einen beispielhaften Personenkraftwagen mit einem Ausführungsbeispiel eines erfindungsgemäßen Spurwechselassistenzsystems;
- Fig. 2: ein beispielhaftes Ablaufdiagramm zur automatisierten Durchführung mehrerer Spurwechsel zum Folgen einer vorausliegenden Ausfahrt;
- Fig. 3: einen beispielhaften Fahrablauf;
- Fig. 4: einen beispielhaften Spurwechselhinweis; und
- Fig. 5: beispielhafte Einsatzszenarien.

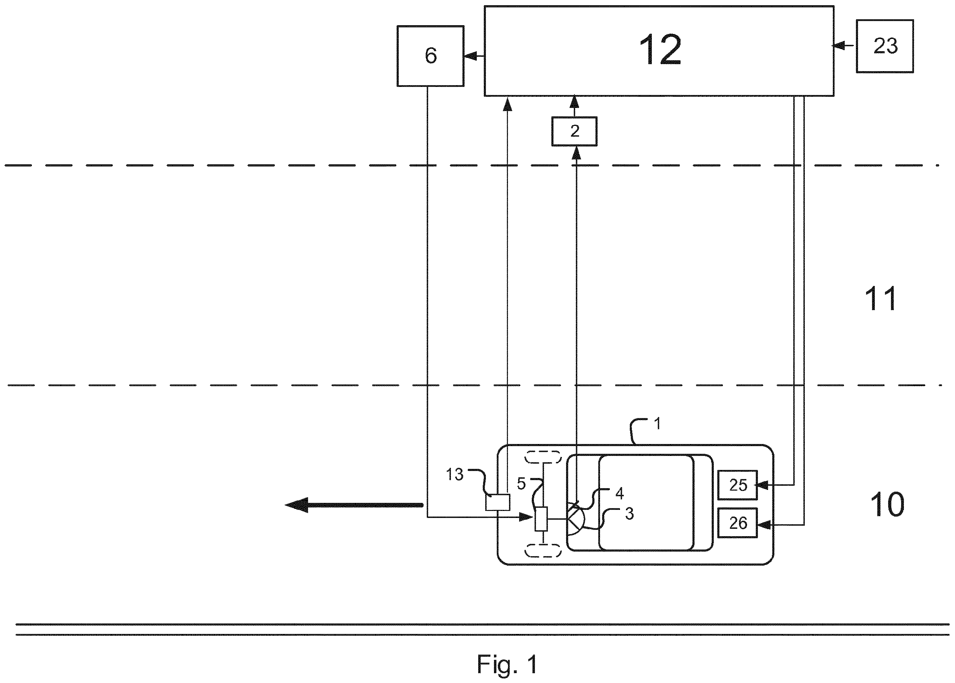

In Fig.1 ist ein sich in Pfeilrichtung bewegender beispielhafter Personenkraftwagen 1 auf einer Ausgangsfahrspur 10 mit einem Ausführungsbeispiel eines im Fahrzeug integrierten Fahrerassistenzsystems 12 dargestellt. Bei der Ausgangsfahrspur 10 handelt es sich beispielsweise um eine Überholspur auf einer Autobahn mit drei Spuren pro Fahrtrichtung. Der dargestellte Pfeil markiert neben der Fahrtrichtung auch die Spurmitte der Fahrspur 10.

Das Fahrzeug umfasst ein Lenkrad 3 zum manuellen Lenken des Fahrzeugs 1 und einen insbesondere im Lenkstock integrierten Blinkerhebel 4. Der Blinkerhebel 4 kann sich in der Nullstellung, in einer der beiden Tippblinken-Stellungen für einen Fahrspurwechsel links oder rechts oder in einer der beiden eingerasteten Dauerblinken-Stellung links oder rechts befinden.

Zur Erfassung der Stellung des Blinkerhebels 4 dient eine Bedienelektronik 2, die die Stellung des Blinkerhebels 4 an das Fahrerassistenzsystem 12 weiterleitet.

Ferner ist eine elektromechanische Lenkung mit einem Lenkungsstellglied 5 mit einem Elektromotor vorgesehen, welches über ein elektronisches Lenkungssteuergerät 6 gesteuert wird.

Darüber hinaus ist ein Umfeldsensorik mit Frontkamera 13 vorhanden, deren Kamerabild in einer Kameraauswertung ausgewertet wird. Mittels des Kamerabildes der Frontkamera können in der Kameraauswertung des Fahrerassistenzsystems 12 die seitlichen Begrenzungslinien der aktuelle Fahrspur 10 vermessen und die Nebenfahrspur 11 erkannt und vermessen werden. Diese Fahrspurinformation wird in dem Fahrerassistenzsystem 12 verwendet.

Die Umfeldsensorik 13 umfasst neben der Frontkamera ein Radarsystem zu Erfassung anderer Verkehrsteilnehmer. Zur Detektion von seitlichen Objekten können Radarsensor vorgesehen sein, die sich an den vier Ecken des Fahrzeugs befinden und links und rechts seitlich nach vorne bzw. hinten schauen.

Das Fahrerassistenzsystem 12 dient unter anderem dazu, das Fahrzeug automatisiert in einer auf die aktuelle Fahrspur 10 bezogenen Querposition zu halten (Spurhaltefunktion). Hierzu wird das Lenkungssteuergerät 6 seitens des Fahrerassistenzsystems 12 im Rahmen der automatisierten Querführung geeignet angesteuert. Das Fahrerassistenzsystem 12 dient auch zur automatisierten Längsführung des Kraftfahrzeugs 1. Während der aktiven Spurhaltefunktion arbeitet die automatisierte Längsführung im Sinne eines Abstandsregeltempomats. Zur automatisierten Längsführung steuert das Fahrerassistenzsystem 12 sowohl das Antriebsmoment des Fahrzeugantriebs 25 als auch ein etwaig angefordertes Bremsmoment des Betriebsbremssystems 26.

Das Fahrerassistenzsystem 12 umfasst außerdem auch eine Spurwechselassistenzfunktion. Mittels der Spurwechselassistenzfunktion wird in Reaktion auf eine Auslösebetätigung des Blinkerhebels 4 das Fahrzeug 1 im Rahmen eines automatisierten Spurwechselmanövers mit automatischer Quer- und Längsführung ausgehend von der aktuellen Fahrspur 10 auf eine unmittelbar benachbarte Zielfahrspur (z. B. die Fahrspur 11) automatisiert gesteuert. Beispielsweise wird ein automatisierter Spurwechsel ausgelöst, falls der Blinkerhebel 4 in einer Tippblinken-Stellung für eine Zeitdauer größer oder größer gleich als ein Schwellwert (z. B. 1 s) gehalten wird. Während des automatisierten Spurwechselmanövers wird sowohl die Querführung als auch die Längsführung vom Fahrerassistenzsystem 12 übernommen.

Ferner ist ein Navigationssystem 23 zur Zielführung vorgesehen. Bei aktiver Zielführung informiert das Navigationssystem 23 das Fahrerassistenzsystem 12 unter anderem mit Information bezüglich der nächsten vorausliegenden Autobahn-Ausfahrt, die sich auf der Route der Zielführung befindet.

Sofern das Fahrerassistenzsystem 12 bei Kenntnis der aktuellen Fahrspur 10 und der Zielfahrspur feststellt, dass ein oder mehrere Spurwechsel erforderlich sind, um einer im Rahmen der Zielführung zu nehmenden, vorausliegenden Ausfahrt zu folgen, wird der Fahrer über die Spurwechsel durch eine Anzeige im Fahrzeugcockpit oder über ein Head-Up-Display informiert. Durch eine geeignete Auslöse-Bedienhandlung, z. B. ein Umschalten des Blinkerhebels 4 in die Einraststellung, kann der Fahrer dann eine automatisierte Durchführung der erforderlichen Spurwechsel auslösen.

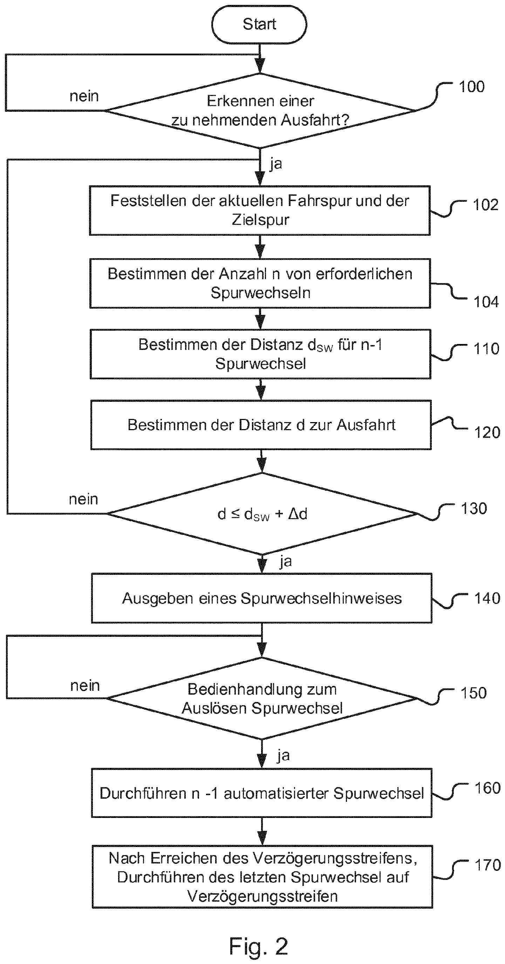

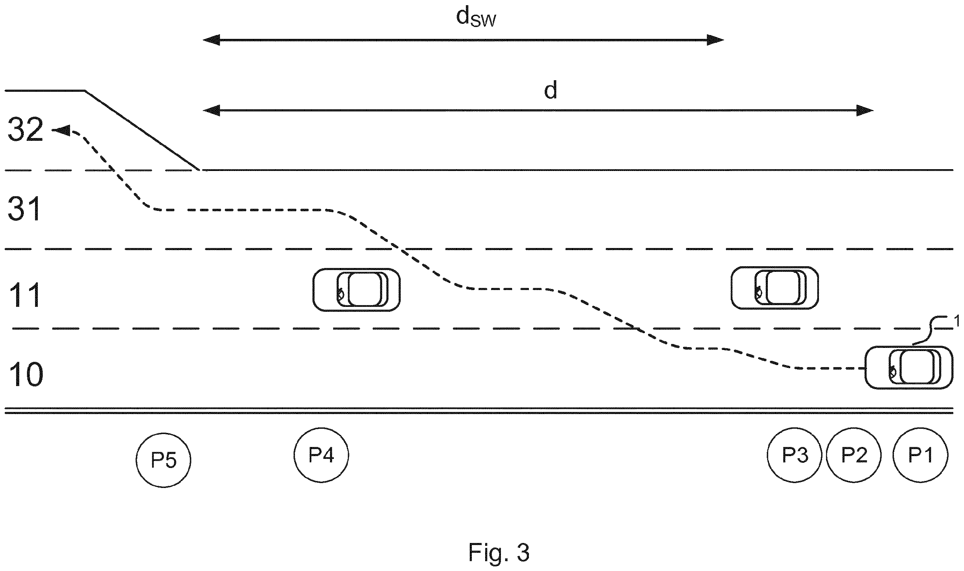

Nachfolgend wird in Verbindung mit Fig. 2 und Fig. 3 die Funktionsweise des Fahrerassistenzsystems 12 bei der Durchführung von automatisierten Spurwechseln im Fall einer vorausliegenden Ausfahrt beschrieben.

Es wird beispielsweise davon ausgegangen, dass das Fahrzeug 1 zunächst auf der linken Fahrspur 10 einer beispielsweise dreispurigen Autobahn mit aktiver automatisierter Quer- und Längsführung mit hoher Geschwindigkeit fährt, wie dies in Fig. 3 dargestellt ist.

Das Fahrerassistenzsystem 12 stellt dann in Schritt 100 aufgrund der Information des Navigationssystems 23 fest, dass eine vorausliegende Ausfahrt genommen werden muss.

Es wird in Schritt 102 die aktuell befahrene Fahrspur (hier: die Fahrspur 10) und die Zielspur (hier Fahrspur 32 der Ausfahrt) festgestellt, um dem Navigationsziel (hier der Ausfahrt) zu folgen. Diese Information kann entweder durch das Fahrerassistenzsystem 12 selbst bestimmt werden und/oder mit Hilfe des Navigationssystems 23 bestimmt werden. Die aktuell befahrene Spur kann beispielsweise durch die vorhandene Fahrzeugsensorik und durch die vom Navigationsgerät mitgeteilte Gesamtspuranzahl bestimmt werden. Mit der Sensorik können Entfernungen zu Randbebauungen gemessen werden. Bei kleinen Entfernungen zu einer Randbebauung kann davon ausgegangen werden, dass sich das Fahrzeug in der jeweiligen äußersten Spur befindet. Generell kann durch den Abstand zu einer Randbebauung auf die Spur geschlossen werden, auf der sich das Fahrzeug befindet. Durch die Erkennung von durchgezogenen und gestrichelten Fahrspurbegrenzungsmarkierungen kann ebenfalls darauf geschlossen werden, dass sich das Egofahrzeug auf einem der jeweiligen äußersten Fahrstreifen befindet. Durch die Beobachtung von anderen Fahrzeugen und Messen v.a. des Querabstands zu diesen Fahrzeugen kann ebenfalls auf die aktuelle Fahrspur geschlossen werden. Wenn die richtige Fahrspur erkannt wurde (die initiale Erkennung ist immer am wichtigsten und am schwierigsten), dann können bei vorhandenen Fahrspurbegrenzungsmarkierungen Spurwechsel immer erkannt werden und man kennt immer die aktuelle Spur.

Die Zielspur wird beispielsweise von dem Navigationssystem 23 an das Fahrerassistenzsystem 12 mitgeteilt.

Es wird gemäß Schritt 104 die Anzahl n (hier n = 3) von erforderlichen Spurwechseln von der aktuellen Fahrspur 10 auf die Zielfahrspur (hier Fahrspur 32) bestimmt.

In Schritt 110 wird eine Distanz dsw abgeschätzt, die im Rahmen von n -1 Spurwechsel ausgehend von der aktuellen Fahrspur auf die der Fahrspur 32 der Ausfahrt benachbarten Fahrspur 31 voraussichtlich zurückgelegt wird.

Hierzu kann beispielsweise die Stärke des Verkehrsaufkommens des umliegenden Verkehrs bestimmt werden und in Abhängigkeit davon, eine durchschnittliche Zeit ΔT für einen Spurwechsel bestimmt werden.

Aus der Anzahl n - 1 von Spurwechseln, der durchschnittliche Zeit ΔT pro Spurwechsel und einer angenommenen Fahrzeuggeschwindigkeit v kann im Schritt 110 die Distanz dsw = f (n; ΔT; v) bestimmt werden, die im Rahmen der n-1 Spurwechsel zurückgelegt wird.

Ferner wird in Schritt 120 die Distanz d zur Ausfahrt bestimmt. Die Distanz d zur Ausfahrt ist beispielsweise die Distanz bis zum Beginn der Fahrspur 32 des Verzögerungsstreifens der Ausfahrt, wie dies in Fig. 3 angedeutet ist.

Die Bestimmung der Distanz zur Ausfahrt wird nachfolgend laufend aktualisiert.

In der Position P1 in Fig. 3 ist dem Fahrerassistenzsystem 12 bekannt, auf welcher Fahrspur sich das Fahrzeug 1 aktuell befindet (nämlich die Fahrspur 10) und auf welche Zielspur (hier die Fahrspur 32) zu wechseln ist, um dem Navigationsziel (hier der Ausfahrt) zu folgen. Ferner ist dem Fahrzeug bekannt, dass n Spurwechsel (hier n = 3) erforderlich sind, um der Ausfahrt zu folgen. Ferner sind die Distanz d zur Ausfahrt sowie die Fahrdistanz dsw für die n -1 Spurwechsel bekannt.

Es wird dann in der Abfrage 130 geprüft, ob die aktuelle Distanz d zum Beginn der Fahrspur 32 der Ausfahrt kleiner gleich der für die n-1 Spurwechsel benötigte Distanz dsw zuzüglich einer Vordistanz Δd ist. Wenn dies der Fall ist, wird in Schritt 140 ein beispielsweise optischer Spurwechselhinweis an den Fahrer ausgegeben. Durch die Vordistanz Δd wird berücksichtigt, dass der Spurwechselhinweis nicht erst ausgegeben wird, wenn die Distanz zur Ausfahrt der benötigten Distanz d_{sw} für die n -1 Spurwechsel entspricht, sondern bereits um die Vordistanz Δd früher. Es wäre auch denkbar, auf eine Vordistanz Δd zu verzichten.

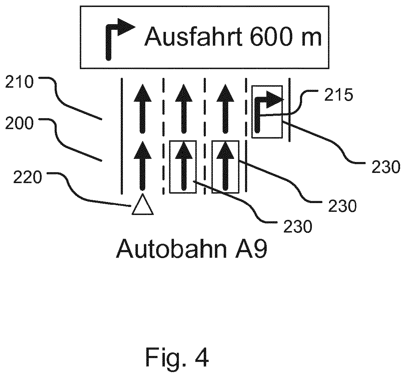

Die Ausgabe des Spurwechselhinweises an den Fahrer erfolgt beispielsweise an der Fahrzeugposition P2 in Fig. 3. Ein beispielhafter optischer Spurwechselhinweis ist in Fig. 4 dargestellt. Sämtliche in Fig. 4 dargestellten Anzeigeelemente werden beispielsweise erst mit Ausgabe des Spurwechselhinweises an der Fahrzeugposition P2 ausgegeben. In Fig. 4 markieren die Pfeile die einzelnen Fahrspuren. Die Pfeile in der Reihe 200 markieren die Fahrspuren an der aktuellen Position, die Pfeile in der Reihe 210 markieren die Fahrspuren an der Position der Ausfahrt, wobei der Pfeil 215 die Spur 32 der Ausfahrt kennzeichnet. Das Marker 220 markiert die aktuell befahrene Fahrspur. Die erforderlichen Spurwechsel zum Erreichen der Fahrspur 32 der Ausfahrt werden durch die in Fig. 4 rechteckigen Markierungen 230 der Fahrspuren hervorgehoben. Die markieren Pfeile in der unteren Reihe 200 geben an, welche Spurwechsel an der aktuellen Position gestartet werden sollen, um dem Navigationsziel zu folgen; der markierte obere Pfeil 215 in der oberen Reihe 210 gibt an, auf welcher Spur sich das Fahrzeug 1 nach den erforderlichen Spurwechselmanöver befinden sollte.

In Reaktion auf die Ausgabe des Spurwechselhinweises wird seitens des Fahrerassistenzsystems 12 geprüft, ob der Fahrer eine Bedienhandlung zum Auslösen der aufgrund der Zielführung erforderlichen n Spurwechsel vornimmt. Vorzugsweise ist die Bedienhandlung zur automatisierten Durchführung der aufgrund der Zielführung erforderlichen Spurwechsel unterschiedlich zu der Bedienhandlung zur automatisierten Durchführung eines einzelnen Spurwechsels. Bei der Bedienhandlung zur automatisierten Durchführung der aufgrund der Zielführung erforderlichen Spurwechsel handelt es sich beispielsweise um die Betätigung des Blinkerhebels 4 von der Ruhestellung in die Einraststellung, während ein einzelner Spurwechsel unabhängig von der aktuellen Zielführung beispielsweise durch ein Umschalten von der Ruhestellung in die Tippblinken-Stellung ausgelöst wird.

Auf die Bedienhandlung des Fahrers hin werden nacheinander n-1 Spurwechsel von der Ausgangsfahrspur 10 auf die der Fahrspur 32 der Ausfahrt benachbarten Fahrspur 31 unter Berücksichtigung des umliegenden Verkehrs automatisiert durch das Fahrerassistenzsystem 12 durchgeführt (s. Schritt 160). Die Durchführung der n-1 Spurwechsel beginnt in Fig. 3 an der Position P3. Die n-1 Spurwechsel werden unter Berücksichtigung des umliegenden Verkehrs nach Möglichkeit so durchgeführt, dass die Ausfahrt rechtzeitig erreicht werden kann.

An der Position P4 sind die n-1 Spurwechsel abgeschlossen.

Nach Erreichen des Beginns des Verzögerungsstreifens 32 wird an der Position P5 ohne das Erfordernis einer weiteren Bedienhandlung automatisiert ein Spurwechsel von der Fahrspur 31 auf die Fahrspur 32 der Ausfahrt durchgeführt.

Sofern die Ausfahrt keinen zusätzlichen Verzögerungsstreifen aufweist, kann in Schritt 110 die Distanz d_{sw} für n Spurwechsel statt für n - 1 bestimmt werden, so dass in Schritt 160 sämtliche erforderlichen n Spurwechsel automatisiert durchgeführt werden können.

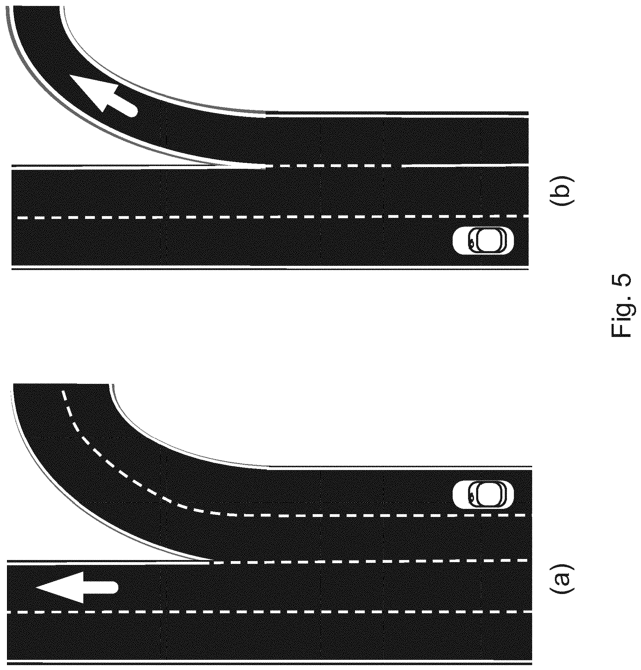

Fig. 5 zeigt verschiedene beispielhafte Szenarien für eine automatisierte Durchführung mehrerer Spurwechsel auf eine Fahrerbedienhandlung hin.

Vorstehend wurde die automatisierte Durchführung mehrerer Spurwechsel auf eine Fahrerbedienhandlung hin aufgrund einer vorausliegenden Ausfahrt beschrieben (s. z. B. Fall b in Fig. 5). Die vorstehend beschriebenen Ausführungen zur automatisierte Durchführung mehrerer Spurwechsel auf eine Fahrerbedienhandlung hin können auch auf den Fall einer anderen vorausliegenden örtlichen Spurwechselursache, beispielsweise einer vorausliegenden Auftrennung von Fahrspuren und den damit zusammenhängenden Spurwechseln (s. Fall a in Fig. 5) übertragen werden. In Fig. 5 geben die Pfeile jeweils die Fahrspur an, auf die zur Zielerreichung bei aktiver Zielführung gewechselt werden soll.

## Patentansprüche

1. Spurwechselassistenzsystem (12) für ein Kraftfahrzeug (1) zum automatisierten Durchführen von Spurwechseln mit zumindest automatisierter Querführung, welches eingerichtet ist,
- aufgrund von Information eines Navigationssystems (3) zur Zielführung festzustellen, dass mehrere Spurwechsel ausgehend von der aktuellen Fahrspur (10) auf eine von der aktuellen Fahrspur verschiedene Zielfahrspur (32) erforderlich sind, um einer aktiven, mittels Navigationssystem durchgeführten Zielführung zu einem Navigationsziel zu folgen;
- vor der automatisierten Durchführung der erforderlichen mehreren Spurwechsel, den Fahrer über ein Erfordernis zum Spurwechsel zu informieren,
- das Vorliegen einer fahrerseitigen Auslöse-Bedienhandlung zum Auslösen der erforderlichen mehrfachen Spurwechsel festzustellen, wobei zum Auslösen der mehreren Spurwechsel nur eine einzige Bedienhandlung als Auslöse-Bedienhandlung erforderlich ist, und
- in Reaktion auf das Feststellen des Vorliegens der Auslöse-Bedienhandlung, die erforderlichen mehreren Spurwechsel ausgehend von der aktuellen Fahrspur (10) auf die von der aktuellen Fahrspur verschiedene Zielfahrspur (32) mit zumindest automatisierter Querführung nacheinander automatisiert durchzuführen.

2. Spurwechselassistenzsystem (12) nach Anspruch 1, wobei das Spurwechselassistenzsystem auch zum automatisierten Halten der Fahrspur mit automatisierter Quer- und Längsführung dient und vor der Durchführung der automatisierten Spurwechsel bereits eine automatisierte Quer- und Längsführung aktiv ist, um die aktuelle Fahrspur automatisiert zu halten..

3. Spurwechselassistenzsystem (12) nach einem der vorhergehenden Ansprüche, wobei das Spurwechselassistenzsystem (12) eingerichtet ist, in Reaktion auf die Feststellung der erforderlichen mehreren Spurwechsel, den Fahrer über ein Erfordernis zum Spurwechsel zu informieren.

4. Spurwechselassistenzsystem (12) nach Anspruch 3, wobei das Spurwechselassistenzsystem (12) eingerichtet ist, den Fahrer über ein Erfordernis zum Spurwechsel in der Weise zu informieren, dass die notwendigen mehrfachen Spurwechsel dem Fahrer signalisiert werden.

5. Spurwechselassistenzsystem (12) nach einem der vorhergehenden Ansprüche, wobei
- im Fahrzeugcockpit ein Fahrtrichtungsanzeiger-Bedienelement (4) zum Aktivieren eines von außerhalb des Fahrzeugs sichtbaren Fahrtrichtungsanzeigers vorgesehen ist, und
- die fahrerseitige Auslöse-Bedienhandlung eine Betätigung des Fahrtrichtungsanzeiger-Bedienelements (4) ist.

6. Spurwechselassistenzsystem (12) nach Anspruch 5, wobei
- das Fahrtrichtungsanzeiger-Bedienelement ein Blinkerhebel (4) ist,
- der Blinkerhebel (4) aufweist:
• eine Ruhestellung für einen nicht aktivierten Fahrrichtungsanzeiger,
• eine Einraststellung, in der der Fahrrichtungsanzeiger dauerhaft aktiviert ist, ohne dass der Blinkerhebel (4) seitens des Fahrers gehalten werden muss, und
• vor der Einraststellung eine Tippblinken-Stellung, in der der Fahrrichtungsanzeiger aktiviert ist und bei Loslassen des Blinkerhebels (4) in die Ruhestellung fällt, und
- die Auslöse-Bedienhandlung ist
• ein Umschalten des Blinkerhebels (4) von der Ruhestellung in die Einraststellung oder
• ein Umschalten des Blinkerhebels (4) von der Ruhestellung in der Tippblinken-Stellung, insbesondere mit Halten des Blinkerhebels in der Tippblinken-Stellung für mindestens solange, bis ein bestimmtes Kriterium erfüllt ist.

7. Spurwechselassistenzsystem (12) nach einem der vorhergehenden Ansprüche, wobei das Spurwechselassistenzsystem (12) eingerichtet ist, festzustellen, dass mehrere Spurwechsel aufgrund einer im Rahmen der Zielführung zu nehmenden, vorausliegenden Ausfahrt von der aktuell befahrenen Straße erforderlich sind.

8. Spurwechselassistenzsystem (12) nach einem der vorhergehenden Ansprüche, wobei das Fahrerassistenzsystem (12) eingerichtet ist,
- eine Distanz (d) in Bezug auf eine vorausliegende Spurwechselursache, insbesondere in Bezug auf eine zu nehmende vorausliegende Ausfahrt, zu bestimmen oder entgegenzunehmen, und
- das Informieren des Fahrers über das Erfordernis des Spurwechsels in Abhängigkeit von der Distanz (d) einzuleiten.

9. Spurwechselassistenzsystem (12) nach einem der vorhergehenden Ansprüche, wobei das Fahrerassistenzsystem (12) eingerichtet ist, die aktuelle Fahrspur (10) festzustellen, wobei der Zeitpunkt oder die Fahrzeugposition (P2), zu dem bzw. zu der das Spurwechselassistenzsystem (12) über das Erfordernis des Spurwechsels informiert, von der aktuellen Fahrspur (10) abhängig ist.

10. Spurwechselassistenzsystem (12) nach Anspruch 9, wobei das Spurwechselassistenzsystem (12) eingerichtet ist, in Abhängigkeit der aktuellen Fahrspur (10) eine Anzahl (n) von durchzuführenden Fahrspurwechseln ausgehend von der aktuellen Fahrspur (10) zu bestimmen, wobei der Zeitpunkt oder die Fahrzeugposition (P2), zu dem bzw. zu der das Spurwechselassistenzsystem (12) über das Erfordernis des Spurwechsels informiert, von dieser Anzahl (n) abhängig ist.

11. Spurwechselassistenzsystem (12) nach einem der vorhergehenden Ansprüche, wobei das Spurwechselassistenzsystem (12) eingerichtet ist, das Verkehrsaufkommen des umliegenden Verkehrs betreffende Information zu bestimmen oder entgegenzunehmen, wobei der Zeitpunkt oder die Fahrzeugposition (P2), zu dem bzw. zu der das Spurwechselassistenzsystem (12) über das Erfordernis des Spurwechsels informiert, von der das Verkehrsaufkommen des umliegenden Verkehrs betreffenden Information abhängig ist.

12. Spurwechselassistenzverfahren für ein Kraftfahrzeug (1) zum automatisierten Durchführen von Spurwechseln mit zumindest automatisierter Querführung, mit den Schritten:
- Feststellen aufgrund von Information eines Navigationssystems (23) zur Zielführung, dass mehrere Spurwechsel ausgehend von der aktuellen Fahrspur (10) auf eine von der aktuellen Fahrspur verschiedene Zielfahrspur (32) erforderlich sind, um einer aktiven, mittels Navigationssystem durchgeführten Zielführung zu einem Navigationsziel zu folgen;
- vor der automatisierten Durchführung der erforderlichen mehreren Spurwechsel, Informieren des Fahrers über ein Erfordernis zum Spurwechsel;
- Feststellen, dass eine fahrerseitige Auslöse-Bedienhandlung zum Auslösen der erforderlichen mehrfachen Spurwechsel vorliegt, wobei zum Auslösen der mehreren Spurwechsel nur eine einzige Bedienhandlung als Auslöse-Bedienhandlung erforderlich ist; und
- in Reaktion auf das Feststellen des Vorliegens der Auslöse-Bedienhandlung, automatisiertes Durchführen der erforderlichen mehreren Spurwechsel ausgehend von der aktuellen Fahrspur (10) auf die von der aktuellen Fahrspur verschiedene Zielfahrspur (32).

## Claims

1. Lane-change assistance system (12) for a motor vehicle (1) for the automated performance of lane changes with at least automated transverse guidance, which system is configured
- to ascertain, on the basis of information from a navigation system (3) for navigation, that a plurality of lane changes proceeding from the current lane (10) to a target lane (32) different from the current lane are required in order to follow active navigation, performed by means of the navigation system, to a navigation target;
- to inform the driver of a need to change lanes, before the automated performance of the plurality of lane changes required,
- to ascertain the presence of a triggering operation action by the driver for triggering the multiple lane changes required, wherein only a single operation action is required as triggering operation action to trigger the plurality of lane changes, and
- in reaction to ascertaining the presence of the triggering operation action, to perform successively in an automated manner the plurality of lane changes required proceeding from the current lane (10) to the target lane (32) different from the current lane with at least automated transverse guidance.

2. Lane-change assistance system (12) according to Claim 1, wherein the lane-change assistance system also serves to automatically keep in the lane with automated transverse and longitudinal guidance, and automated transverse and longitudinal guidance for automatically keeping in the current lane is already active before the automated lane change is performed.

3. Lane-change assistance system (12) according to either of the preceding claims, wherein the lane-change assistance system (12) is configured, in reaction to ascertaining the plurality of lane changes required, to inform the driver of a need to change lanes.

4. Lane-change assistance system (12) according to Claim 3, wherein the lane-change assistance system (12) is configured to inform the driver of a need to change lanes in such a way that the multiple lane changes required are signaled to the driver.

5. Lane-change assistance system (12) according to any of the preceding claims, wherein
- a travel direction indicator operating element (4) for activating a travel direction indicator visible from outside the vehicle is provided in the vehicle cockpit, and
- the triggering operation action by the driver is an actuation of the travel direction indicator operating element (4).

6. Lane-change assistance system (12) according to Claim 5, wherein
- the travel direction indicator operating element is a turn signal lever (4),
- the turn signal lever (4) has:
• a rest position for a non-activated travel direction indicator,
• an engaged position, in which the travel direction indicator is permanently activated without the driver having to hold the turn signal lever (4), and
• before the engaged position a one-touch turn signal position, in which the travel direction indicator is activated and returns to the rest position upon the turn signal lever (4) being released, and
- the triggering operation action is
• switching the turn signal lever (4) from the rest position to the engaged position or
• switching the turn signal lever (4) from the rest position to the one-touch turn signal position, in particular with the turn signal lever being held in the one-touch turn signal position for at least as long as until a specific criterion is satisfied.

7. Lane-change assistance system (12) according to any of the preceding claims, wherein the lane-change assistance system (12) is configured to ascertain that a plurality of lane changes are required on account of an exit ahead from the road currently being traveled, which exit is to be taken in the context of the navigation.

8. Lane-change assistance system (12) according to any of the preceding claims, wherein the driver assistance system (12) is configured
- to determine or receive a distance (d) with respect to a lane change cause ahead, in particular with respect to an exit ahead that is to be taken, and
- to initiate informing the driver of the need for the lane change depending on the distance (d).

9. Lane-change assistance system (12) according to any of the preceding claims, wherein the driver assistance system (12) is configured to ascertain the current lane (10), wherein the point in time or the vehicle position (P2) at which the lane-change assistance system (12) informs of the need for the lane change is dependent on the current lane (10).

10. Lane-change assistance system (12) according to Claim 9, wherein the lane-change assistance system (12) is configured, depending on the current lane (10), to determine a number (n) of lane changes to be performed proceeding from the current lane (10), wherein the point in time or the vehicle position (P2) at which the lane-change assistance system (12) informs of the need for the lane change is dependent on said number (n).

11. Lane-change assistance system (12) according to any of the preceding claims, wherein the lane-change assistance system (12) is configured to determine or receive information concerning the traffic volume of the surrounding traffic, wherein the point in time or the vehicle position (P2) at which the lane-change assistance system (12) informs of the need for the lane change is dependent on the information concerning the traffic volume of the surrounding traffic.

12. Lane-change assistance method for a motor vehicle (1) for the automated performance of lane changes with at least automated transverse guidance, comprising the following steps:
- ascertaining, on the basis of information from a navigation system (23) for navigation, that a plurality of lane changes proceeding from the current lane (10) to a target lane (32) different from the current lane are required in order to follow active navigation, performed by means of the navigation system, to a navigation target;
- informing the driver of a need to change lanes, before the automated performance of the plurality of lane changes required;
- ascertaining the presence of a triggering operation action by the driver for triggering the multiple lane changes required, wherein only a single operation action is required as triggering operation action to trigger the plurality of lane changes; and
- in reaction to ascertaining the presence of the triggering operation action, performing in an automated manner the plurality of lane changes required proceeding from the current lane (10) to the target lane (32) different from the current lane.

## Revendications

1. Système d'assistance au changement de voie (12) pour un véhicule automobile (1), destiné à l'exécution automatisée de changements de voie au moins à guidage transversal automatisé, qui est aménagé pour
- constater sur la base d'une information d'un système de navigation (3) pour le guidage à destination que plusieurs changements de voie de la voie actuelle (10) sur une voie cible (32) différente de la voie actuelle sont nécessaires pour suivre un guidage à destination actif, effectué au moyen du système de navigation, jusqu'à une destination de navigation ;
- avant l'exécution automatisée des plusieurs changements de voie nécessaires, informer le conducteur d'une nécessité de changement de voie,
- constater l'existence d'une manipulation de déclenchement de la part du conducteur pour déclencher les changements de voie multiples nécessaires, une seule manipulation étant nécessaire en tant que manipulation de déclenchement pour déclencher les plusieurs changements de voie, et
- en réponse à la constatation de l'existence de la manipulation de déclenchement, exécuter de manière automatisée les uns après les autres les plusieurs changements de voie nécessaires de la voie actuelle (10) sur la voie cible (32), différente de la voie actuelle, avec au moins un guidage transversal automatisé.

2. Système d'assistance au changement de voie (12) selon la revendication 1, le système d'assistance au changement de voie servant également au maintien automatisé de la voie avec un guidage transversal et longitudinal automatisé, et un guidage transversal et longitudinal automatisé étant déjà actif avant l'exécution des changements de voie automatisés afin de maintenir de manière automatisée la voie actuelle.

3. Système d'assistance au changement de voie (12) selon l'une quelconque des revendications précédentes, le système d'assistance au changement de voie (12) étant aménagé, en réponse à la constatation des plusieurs changements de voie nécessaires, pour informer le conducteur d'une nécessité de changement de voie.

4. Système d'assistance au changement de voie (12) selon la revendication 3, le système d'assistance au changement de voie (12) étant aménagé pour informer le conducteur d'une nécessité de changement de voie de telle sorte que les changements de voie multiples nécessaires sont signalés au conducteur.

5. Système d'assistance au changement de voie (12) selon l'une quelconque des revendications précédentes, dans lequel
- sur le tableau de bord du véhicule, un élément de commande d'indicateur de direction (4) est prévu pour activer un indicateur de direction visible à l'extérieur du véhicule, et
- la manipulation de déclenchement de la part du conducteur est un actionnement de l'élément de commande d'indicateur de direction (4).

6. Système d'assistance au changement de voie (12) selon la revendication 5, dans lequel
- l'élément de commande d'indicateur de direction est un levier de clignotant (4),
- le levier de clignotant (4) présente :
• une position de repos pour un indicateur de direction non activé,
• une position d'enclenchement dans laquelle l'indicateur de direction est activé en permanence sans que le conducteur ait à tenir le levier de clignotant (4), et
• avant la position d'enclenchement, une position de clignotement par impulsion dans laquelle l'indicateur de direction est activé et revient à la position de repos si le levier de clignotant (4) est relâché, et
- la manipulation de déclenchement est
• un basculement du levier de clignotant (4) de la position de repos à la position d'enclenchement, ou
• un basculement du levier de clignotant (4) de la position de repos à la position de clignotement par impulsion, en particulier en maintenant le levier de clignotant dans la position de clignotement par impulsion au moins jusqu'à ce qu'un certain critère soit satisfait.

7. Système d'assistance au changement de voie (12) selon l'une quelconque des revendications précédentes, le système d'assistance au changement de voie (12) étant aménagé pour constater que plusieurs changements de voie sont nécessaires en raison d'une sortie à venir de la route actuellement parcourue, à prendre dans le cadre du guidage à destination.

8. Système d'assistance au changement de voie (12) selon l'une quelconque des revendications précédentes, le système d'assistance au conducteur (12) étant aménagé pour
- déterminer ou recevoir une distance (d) par rapport à une cause de changement de voie à venir, en particulier par rapport à une sortie à venir à prendre, et
- lancer l'information du conducteur au sujet de la nécessité du changement de voie en fonction de la distance (d).

9. Système d'assistance au changement de voie (12) selon l'une quelconque des revendications précédentes, le système d'assistance au conducteur (12) étant aménagé pour constater la voie actuelle (10), l'instant ou la position de véhicule (P2) auquel ou à laquelle le système d'assistance au changement de voie (12) informe de la nécessité du changement de voie dépendant de la voie actuelle (10).

10. Système d'assistance au changement de voie (12) selon la revendication 9, le système d'assistance au changement de voie (12) étant aménagé pour déterminer en fonction de la voie actuelle (10) un nombre (n) de changements de voie à effectuer en partant de la voie actuelle (10), l'instant ou la position de véhicule (P2) auquel ou à laquelle le système d'assistance au changement de voie (12) informe de la nécessité du changement de voie dépendant de ce nombre (n).

11. Système d'assistance au changement de voie (12) selon l'une quelconque des revendications précédentes, le système d'assistance au changement de voie (12) étant aménagé pour déterminer ou recevoir une information concernant le volume de trafic du trafic environnant, l'instant ou la position de véhicule (P2) auquel ou à laquelle le système d'assistance au changement de voie (12) informe de la nécessité du changement de voie dépendant de l'information concernant le volume de trafic du trafic environnant.

12. Procédé d'assistance au changement de voie pour un véhicule automobile (1), destiné à l'exécution automatisée de changements de voie au moins à guidage transversal automatisé, comprenant les étapes consistant à :
- constater sur la base d'une information d'un système de navigation (23) pour le guidage à destination que plusieurs changements de voie de la voie actuelle (10) sur une voie cible (32) différente de la voie actuelle sont nécessaires pour suivre un guidage à destination actif, effectué au moyen du système de navigation, jusqu'à une destination de navigation ;
- avant l'exécution automatisée des plusieurs changements de voie nécessaires, informer le conducteur d'une nécessité de changement de voie ;
- constater qu'il existe une manipulation de déclenchement de la part du conducteur pour déclencher les changements de voie multiples nécessaires, une seule manipulation étant nécessaire en tant que manipulation de déclenchement pour déclencher les plusieurs changements de voie ; et
- en réponse à la constatation de l'existence de la manipulation de déclenchement, exécuter de manière automatisée les plusieurs changements de voie nécessaires de la voie actuelle (10) sur la voie cible (32), différente de la voie actuelle.
